# EUROPÄISCHE PATENTSCHRIFT

(11) **EP 0 576 807 B1**
(45) Veröffentlichungstag und Bekanntmachung des Hinweises auf die Patenterteilung: **11.09.1996**
(21) Anmeldenummer: 93107428.0
(22) Anmeldetag: 07.05.1993
(51) Int. Cl.: F15B 13/08, F16K 31/06, F16K 11/24

(54) **Ventilanordnung**
Valve arrangement
Arrangement de soupape

(30) Priorität: 16.06.1992 DE 4219679
(43) Veröffentlichungstag der Anmeldung: 05.01.1994
(73) Patentinhaber: Hella KG Hueck & Co., 59552 Lippstadt (DE)
(72) Erfinder: Stümpel, Josef, W-4799 Borchen (DE)

(56) Entgegenhaltungen:
- CH-A- 666 943
- DE-A- 2 452 945
- DE-A- 3 218 006
- DE-A- 3 730 684
- DE-A- 3 917 242
- DE-C- 3 718 070
- FR-A- 2 482 241
- US-A- 4 542 767

## Beschreibung

Die Erfindung betrifft eine Ventilanordnung, bestehend aus mindestens zwei Ventilen, insbesondere Hubankerventilen, insbesondere für ein Kraftfahrzeug, die druckleitend miteinander verbunden sind, wie bekannt aus der DE-A-2 452 945.

Solche Ventilanordnungen finden insbesondere in Kraftfahrzeugen zur Steuerung, insbesondere von pneumatischen Medien wie Luft, beispielsweise in pneumatischen Zentralverriegelungsanlagen oder als Wegeventile in Klimaanlagen, Verwendung.

Besonders vorteilhaft ausgebildete Ventile, die sich zu einer gattungsgemäßen Ventilanordnung zusammenfügen lassen, ausgestaltet in Form von elektromagnetisch betätigten Hubankerventilen, sind beispielsweise aus der DE-GM 89 13 163 und der DE-GM 90 16 365 bekannt, so daß der Aufbau einzelner Hubankerventile hier nicht diskutiert werden soll.

Das Zusammenfügen mehrerer Ventile in solchen Anlagen zu einer Ventilanordnung erweist sich dabei als arbeitsaufwendig und teuer, da jeweils mehrere Druckstutzen beispielsweise mittels Schläuchen druckleitend miteinander verbunden werden müssen. Dies kann nur in seltenen Fällen und selbst dann nur unter erheblichem Aufwand automatisiert geschehen, so daß die Herstellung druckleitender Verbindungen zumeist in kostenintensiver Handarbeit erfolgt, wobei ein fehlerhaftes Zusammenfügen von zu verbindenden Anschlüssen nicht auszuschließen ist. Weitere Kosten entstehen durch die hierzu benötigten Verbindungsteile.

Ähnliche Überlegungen gelten auch für die Herstellung der elektrischen Verbindungen zwischen den einzelnen Ventilen.

Ein weiterer Nachteil bei der Anwendung mehrerer einzelner Ventile ergibt sich daraus, daß in diesem Fall jedes einzelne Ventil ein eigenes Gehäuse aufweist. Dieses Gehäuse macht nicht nur die Herstellung eines einzelnen Ventiles aufwendiger und teurer, sondern erfordert auch einen erheblichen Platzbedarf beim Zusammenfügen einer aus mehreren Ventilen bestehenden Anordnung, was sich aufgrund der beengten Platzverhältnisse besonders bei der Anwendung einer solchen Anordnung in einem Kraftfahrzeug negativ auswirkt.

Die Aufgabe der Erfindung ist es daher, eine Ventilanordnung zu schaffen, die möglichst platzsparend aufgebaut ist, die aus möglichst wenig Einzelteilen besteht, die zudem einen möglichst geringen Montageaufwand benötigt und die die Fehlermöglichkeiten bei der Montage einer solchen Anordnung verringert und daher besonders einfach und kostengünstig herstellbar ist.

Diese Aufgabe wird erfindungsgemäß dadurch gelöst, daß zumindest Teile der Ventilkörper einstückig an einer gemeinsamen Grundplatte angeformt sind und daß die Grundplatte zumindest einen Kanal ausbildet, der druckleitende Verbindungen zwischen den Ventilen herstellt.

Durch die gemeinsame Anordnung mehrerer Ventile auf einer Grundplatte läßt sich ein besonders kompakter Aufbau einer solchen Ventilanordnung erreichen.

Vorzugsweise sämtliche Ventile sind dazu auf einer gemeinsamen Grundplatte angeordnet, wobei wenigstens ein Teil jedes Ventilkörpers einstückig an die Grundplatte angeformt ist. Für die gesamte Ventilanordnung wird nur ein einziges Gehäuse benötigt, welches sich leicht durch eine auf die Grundplatte aufgesetzte Gehäusekappe herstellen läßt und wodurch ein besonders platzsparender Aufbau möglich ist.

Besonders vorteilhaft ist, daß die zwischen den Ventilen bestehenden, druckleitenden Verbindungen durch Kanäle gebildet werden, die durch die Grundplatte ausgebildet werden und die mit dem an der Grundplatte angeformten Ventilkörperteilen in Verbindung stehen. Je nach Anordnung ist es möglich, sämtliche druckleitenden Verbindungen zwischen den Ventilen durch solche Kanäle auszubilden. In diesem Fall kann vorteilhafterweise ganz auf zusätzliche druckleitende Verbindungsmittel zwischen den Ventilen verzichtet werden, wodurch die Kosten und der Montageaufwand für diese Verbindungsmittel eingespart werden können. Zudem entfallen die Fehlermöglichkeiten bei der Montage, die sich durch fehlerhaftes Zusammenfügen von Anschlüssen mittels dieser Verbindungsmittel ergeben.

Vorteilhaft ist auch, daß die Druckstutzen, welche die erfindungsgemäße Ventilanordnung mit weiteren druckerzeugenden oder druckverbrauchenden Geräten verbindet, alle auf der gehäuseseitig äußeren Seite der Grundplatte angeformt sind. Hierdurch können sämtliche mit der Ventilanordnung verbundenen druckleitenden Mittel auf besonders einfache Weise beispielsweise über eine einzige vorgefertigte Steckerverbindung an die Grundplatte montiert werden.

Besonders vorteilhaft ist es, auf der Grundplatte eine asymmetrische Anordnung der Druckstutzen zu wählen, da hierdurch ein fehlerhaftes Anfügen des vorgefertigten Steckers unmöglich ist.

Ähnliche Überlegungen gelten ebenfalls bezüglich der elektrischen Anschlüsse der Ventile. Auch hier ist die Anordnung von mehreren Ventilen auf einer gemeinsamen Grundplatte und damit in einem einzigen Gehäuse besonders vorteilhaft.

Da sämtliche Ventile zumeist einen gemeinsamen elektrischen Anschluß aufweisen, kann die Ventilanordnung gehäuseintern schon soweit verschaltet werden, daß nur eine minimale Anzahl von elektrischen Anschlüssen nach außen geführt werden muß.

Hierzu wird vorteilhafterweise an die gehäuseseitig außenliegende Seite der Grundplatte ein elektrisches Verbindungselement vorzugsweise in Form einer Steckverbindung angeformt, über welche elektrische Anschlüsse aus dem Gehäuse der Ventilanordnung herausgeführt sind.

Durch diesen einzigen Steckanschluß für sämtliche elektrischen Anschlüsse der Ventilanordnung wird nur ein geringfügiger Aufwand zur Herstellung elektrischer Verbindungen benötigt. Zudem werden noch Verbindungsleitungen eingespart, da nicht mehr jedem einzelnen Ventil eine separate Masseleitung zugeführt wird.

Die genannten Vorteile kommen besonders deutlich in den beengten Platzverhältnissen von Kraftfahrzeugen zum Tragen. So kann eine solche erfindungsgemäße Ventilanordnung besonders vorteilhaft, beispielsweise in einer Klimaanlage eines Kraftfahrzeuges, Verwendung finden.

Der Aufbau und die Funktion einer erfindungsgemäßen Ventilanordnung seien im folgenden anhand des in der Zeichnung dargestellten Ausführungsbeispiels näher erläutert.

Es zeigen
Figur 1 eine Schnittzeichnung durch eine erfindungsgemäße Ventilanordnung,
Figur 2 eine Draufsicht auf die Grundplatte von außerhalb des Gehäuses gesehen,
Figur 3 eine Skizze der elektrischen und druckleitenden Verbindung einer erfindungsgemäßen Ventilanordnung.

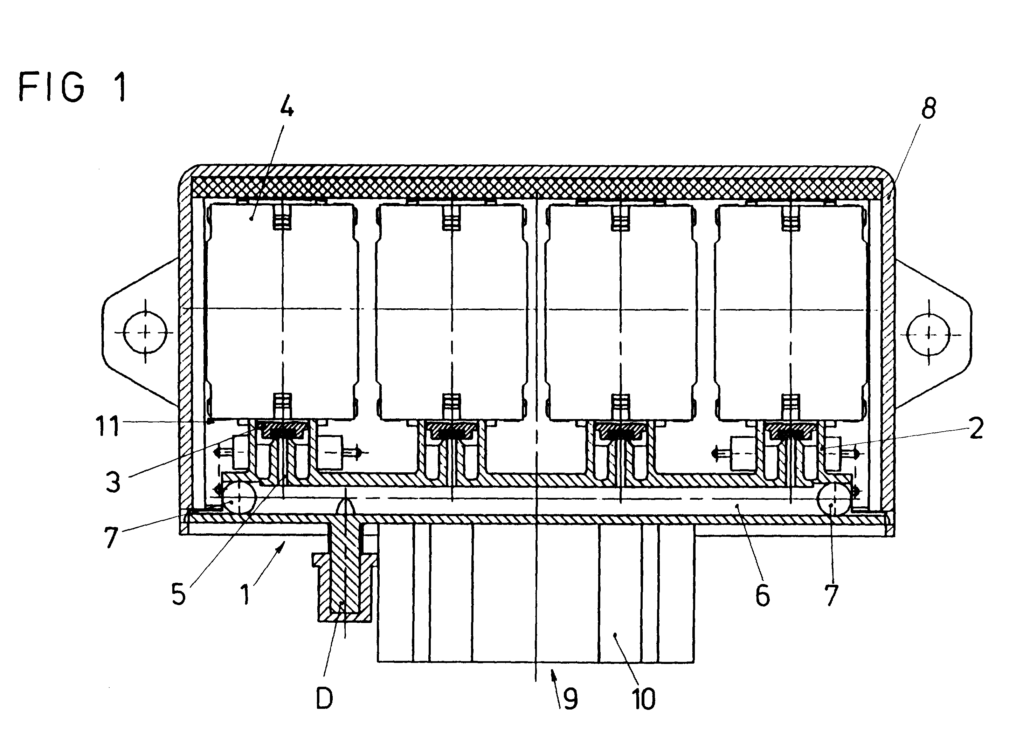

In der Figur 1 bildet eine Grundplatte (1) vier gleichartige Ventilkörper (2) aus, die jeweils zu einem Hubankerventil (11) gehören. Innerhalb jedes Ventilkörpers (2) befindet sich ein magnetisch beeinflußbarer Hubanker (3), welcher von jeweils einer die Ventilkörper (2) umfassenden Magneteinheit (4), welche wiederrum aus einer Spule und einem die Spule umfassenden Joch besteht, in seiner Position beeinflußt werden kann.

Der genaue Aufbau und die Funktionsweise eines vorteilhaft aufgebauten **einzelnen** Hubankerventils ist in der DE-GM 90 16 365 dargestellt und soll daher an dieser Stelle nicht in Einzelheiten wiederholt werden.

Erwähnenswert ist hier jedoch, daß innerhalb jedes an die Grundplatte (1) angeformten Ventilkörpers (2) auch einer der zum Hubankerventil (11) gehörenden Ventilsitze (5) an die Grundplatte (1) angeformt ist.

Jeder der Ventilsitze (5) ist über den Kanal (6) druckleitend mit dem Stutzen (D) verbunden. Der Kanal (6) ist dabei als Hohlraum innerhalb der Grundplatte (1) ausgebildet und wird an seinen Endpunkten durch zwei Kugeln (7) verschlossen.

Mit der Grundplatte (1) ist eine Gehäusekappe (8) verrastet, der zusammen mit der Grundplatte (1) ein im wesentlichen geschlossenes Gehäuse ausbildet.

An die bezüglich des Gehäuses außenliegende Seite der Grundplatte (1) ist ein elektrisches Verbindungselement (9) angeformt, welches aus mehreren durch die Grundplatte (1) hindurchgeführten Kontaktstiften und aus einer die Kontaktstifte umlaufenden einstückig an die Grundplatte (1) angeformten Wandung (10) besteht.

Die Kontaktstifte sind in der Figur 1 nicht dargestellt, ebenso nicht die elektrischen Anschlüsse der Magneteinheiten (4) und die elektrischen Verbindungen zwischen den Kontaktstiften und den Anschlüssen. Diese werden über eine Leiterplatte hergestellt, mit der sowohl die Kontaktstifte als auch die Anschlüsse verlötet sind, und die man sich parallel zur Zeichnungsebene angeordnet vorstellen kann.

Bedingt durch die gewählte Schnittebene sind auch ins Innere der Ventilkörper (2) führende Bohrungen in der Figur 1 nicht sichtbar. Die Bohrungen durchstoßen die Grundplatte (1) jeweils zwischen den Wandungen der Ventilkörper (2) und den Ventilsitzen (5) und sind druckleitend mit jeweils einem in der Figur 1 nicht dargestellten Druckstutzen verbunden, welche an der Außenseite der Grundplatte (1) angeformt sind.

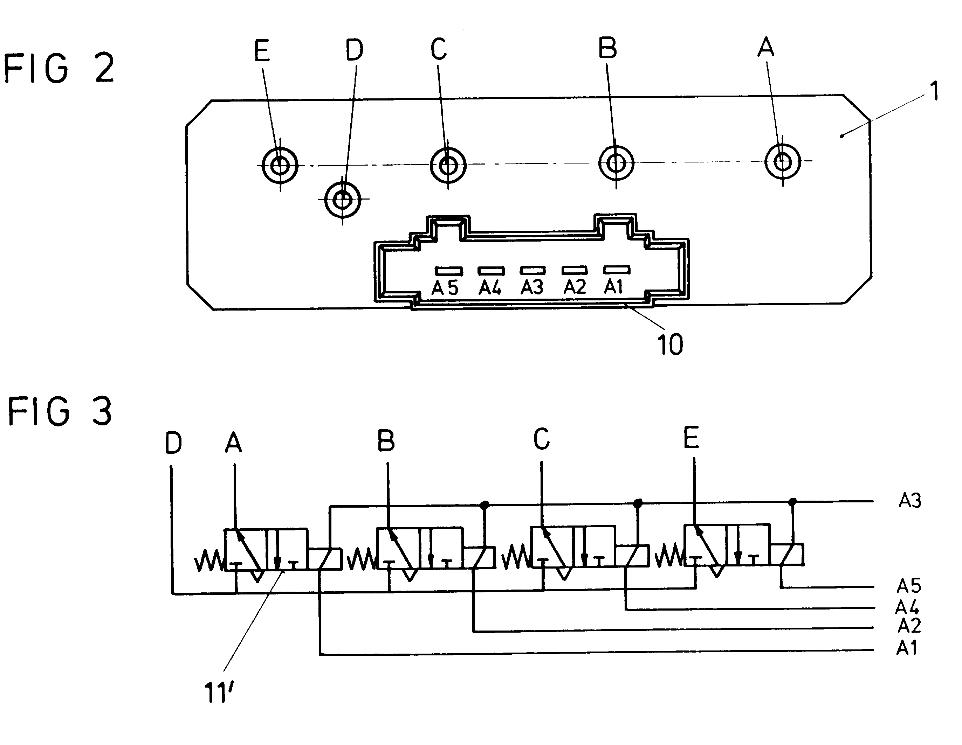

Um diese in der Figur 1 nicht dargestellten Sachverhalte weiter zu verdeutlichen, zeigt die Figur 2 eine Draufsicht auf die Grundplatte (1) und zwar von außerhalb des Gehäuses gesehen.

Dargestellt sind vier Druckstutzen (A, B, C, E), die mit den in die Ventilkörper (2) führenden Bohrungen druckleitend verbunden sind und schaltbare Anschlüsse der Ventile (11) darstellen.

Der schon in der Figur 1 dargestellte weitere Druckstutzen (D) steht mit dem Kanal (6) in druckleitender Verbindung.

Weiterhin sind die die Grundplatte (1) durchstoßenden Kontaktstifte (A1, A2, A3, A4, A5) erkennbar, welche zusammen mit der sie umgebenden umlaufenden Wandung (10), das elektrische Verbindungselement (9) in Form eines Flachsteckers ausbilden.

Zur weiteren Verdeutlichung der erfindungsgemäßen Ventilanordnung zeigt die Figur 3 eine Skizze der druckleitenden und der stromleitenden Verbindungen der erfindungsgemäßen Ventilanordnung.

Die Leitungen (A, B, C, D, E) stellen die druckleitenden Verbindungen zu den in der Figur 2 mit gleichen Buchstaben bezeichneten Druckstutzen her. Jedes Ventil (11) weist zwei Schaltstellungen auf, wobei in der betätigten Stellung jedes Ventil (11) eine druckleitende Verbindung zwischen einem Druckstutzen (A, B, C, E) und dem zum Druckstutzen (D) führenden Druckkanal herstellt. In der unbetätigten Schaltstellung ist diese Verbindung unterbrochen.

Auf der elektrischen Seite besitzen alle vier Ventile (11') einen gemeinsamen Anschluß (A3), sowie jeweils einen weiteren Anschluß (A1, A2, A4, A5) zur Auswahl eines zu betätigenden Ventils (11'). Die dargestellte Ventilanordnung kann daher über nur fünf elektrische Anschlüsse (A1, A2, A3, A4, A5) gesteuert werden.

Die in der Zeichnung dargestellte Vorrichtung ist selbstverständlich nur ein mögliches Ausführungsbeispiel für eine erfindungsgemäße Ventilanordnung. Selbstverständlich kann auch eine größere oder auch eine kleinere Anzahl von Ventilen zu einer erfindungsgemäßen Ventilanordnung zusammengefügt werden.

Eine vorteilhafte Weiterbildung des Erfindungsgedankens kann auch darin bestehen, einzelne Ventile durch andere Elemente zu ersetzen, beispielsweise durch einen pneumatisch zu betätigenden Druckschalter.

## Patentansprüche

1. Ventilanordnung, bestehend aus mindestens zwei Ventilen, insbesondere Hubankerventilen, insbesondere für ein Kraftfahrzeug, die druckleitend miteinander verbunden sind, dadurch gekennzeichnet, daß zumindest Teile der Ventilkörper (2) einstückig an einer gemeinsamen Grundplatte (1) angeformt sind und daß die Grundplatte (1) zumindest einen Kanal (6) ausbildet, der druckleitende Verbindungen zwischen den Ventilen (11) herstellt.

2. Ventilanordnung nach Anspruch 1, dadurch gekennzeichnet, daß alle zwischen den Ventilen (11) bestehenden druckleitenden Verbindungen durch Kanäle, die die Grundplatte (1) ausbilden, hergestellt sind.

3. Ventilanordnung nach Anspruch 1, dadurch gekennzeichnet, daß an der Grundplatte (1) Druckstutzen (A, B, C, D, E) angeformt sind.

4. Ventilanordnung nach Anspruch 1, dadurch gekennzeichnet, daß an der Grundplatte (1) ein elektrisches Verbindungselement (9) in Form eines Steckers oder einer Buchse angeformt ist.

5. Ventilanordnung nach Anspruch 4, dadurch gekennzeichnet, daß das elektrische Verbindungselement (9) als Flachstecker ausgebildet ist.

6. Ventilanordnung nach Anspruch 1, dadurch gekennzeichnet, daß alle Ventile (11) mit einer gemeinsamen Druckleitung verbunden sind.

7. Ventilanordnung nach Anspruch 6, dadurch gekennzeichnet, daß die gemeinsame Druckleitung als an die Grundplatte (1) angeformter Kanal (6) ausgebildet ist.

8. Ventilanordnung nach Anspruch 1, dadurch gekennzeichnet, daß alle Ventile (11, 11') eine gemeinsame elektrische Versorgungsleitung (A3) aufweisen.

9. Ventilanordnung nach Anspruch 3, dadurch gekennzeichnet, daß die Druckstutzen (A, B, C, D, E) an der Grundplatte (1) asymmetrisch angeordnet sind.

10. Ventilanordnung nach Anspruch 1, dadurch gekennzeichnet, daß auf der Grundplatte (1) weitere Bauteile angeordnet sind, die mit der Grundplatte (1) druckleitend verbunden sind.

11. Ventilanordnung nach Anspruch 10, dadurch gekennzeichnet, daß zu den weiteren Bauteilen ein Druckschalter gehört.

12. Ventilanordnung nach einem oder mehreren der Ansprüche 1 bis 11, dadurch gekennzeichnet, daß die Ventilanordnung zur Steuerung einer Klimaanlage in einem Kraftfahrzeug verwendet wird.

## Claims

1. Valve arrangement, comprising at least two valves, in particular lifting anchor valves, in particular for a motor vehicle, which are in a pressure-ducting manner interconnected, **characterized in that** at least parts of the valve bodies (2) are formed as an integral part to a common base plate (1), and that the base plate (1) forms at least one channel (6) which establishes pressure-ducting connections between the valves (11).

2. Valve arrangement according to Claim 1, **characterized in that** all pressure-ducting connections in existence between the valves (11) are established by channels which form the base plate (1).

3. Valve arrangement according to Claim 1, **characterized in that** pressure sockets (A, B, C, D, E) are formed onto the base plate (1).

4. Valve arrangement according to Claim 1, **characterized in that** onto the base plate (1) is formed an electrical connecting element (9) in the form of a plug or a box.

5. Valve arrangement according to Claim 4, **characterized in that** the electrical connecting element (9) is designed as a flat plug.

6. Valve arrangement according to Claim 1, **characterized in that** all valves (11) are connected to a common pressure pipe.

7. Valve arrangement according to Claim 6, **characterized in that** the common pressure pipe is designed as a channel (6) which is formed onto the base plate (1).

8. Valve arrangement according to Claim 1, **characterized in that** all valves (11, 11') have a common electrical supply line (A3).

9. Valve arrangement according to Claim 3, **characterized in that** the pressure sockets (A, B, C, D, E) are asymmetrically arranged on the base plate (1).

10. Valve arrangement according to Claim 1, **characterized in that** the base plate (1) carries further components, which are in a pressure ducting manner connected to the base plate (1).

11. Valve arrangement according to Claim 10, **characterized in that** the additional components include a pressure switch.

12. Valve arrangement according to one of more of Claims 1 to 11, **characterized in that** the valve arrangement is used for controlling an air-conditioner in a motor vehicle.

## Revendications

1. Dispositif de soupapes constitué par au moins deux soupapes, en particulier des soupapes à induit de levage, en particulier pour un véhicule automobile, qui sont reliées l'une à l'autre pour conduire la pression, caractérisé en ce que des parties au moins des corps de soupapes (2) sont formées d'une seule pièce sur une plaque de base commune (1) et en ce que la plaque de base (1) forme au moins un canal (6) qui établit des liaisons pour conduire la pression entre les soupapes (11).

2. Dispositif de soupapes selon la revendication 1, caractérisé en ce que toutes les liaisons destinées à conduire la pression et existant entre les soupapes (11) sont établies par des canaux qui forment la plaque de base (1).

3. Dispositif de soupapes selon la revendication 1, caractérisé en ce que des tubulures de refoulement (A, B, C, D, E) sont formées sur la plaque de base (1).

4. Dispositif de soupapes selon la revendication 1, caractérisé en ce qu'un élément de connexion (9) électrique sous la forme d'un connecteur ou d'une douille est formé sur la plaque de base (1).

5. Dispositif de soupapes selon la revendication 4, caractérisé en ce que l'élément de connexion (9) électrique est réalisé sous forme de prise plate.

6. Dispositif de soupapes selon la revendication 1, caractérisé en ce que toutes les soupapes (11) sont reliées avec une conduite de pression commune.

7. Dispositif de soupapes selon la revendication 6, caractérisé en ce que la conduite de pression commune est réalisée sous forme d'un canal (6) ménagé sur la plaque de base (1).

8. Dispositif de soupapes selon la revendication 1, caractérisé en ce que toutes les soupapes (11, 11') présentent une ligne d'alimentation électrique (A3) commune.

9. Dispositif de soupapes selon la revendication 3, caractérisé en ce que les tubulures de refoulement (A, B, C, D, E) sont agencées de manière asymétrique sur la plaque de base (1).

10. Dispositif de soupapes selon la revendication 1, caractérisé en ce que d'autres composants sont agencés sur la plaque de base (1), qui sont reliés à la plaque de base (1) de façon à conduire la pression.

11. Dispositif de soupapes selon la revendication 10, caractérisé en ce qu'un commutateur de pression fait partie des autres composants.

12. Dispositif de soupapes selon l'une quelconque ou plusieurs des revendications 1 à 11, caractérisé en ce que le dispositif de soupapes est utilisé pour commander la climatisation dans un véhicule.
